# EUROPEAN PATENT APPLICATION

(11) **EP 4 674 558 A2**
(43) Date of publication of application: **07.01.2026**
(21) Application number: 25187391.5
(22) Date of filing: 03.07.2025
(51) Int. Cl.: B23K 26/12, B23K 26/36

(54) **METHOD AND PROTECTIVE APPARATUS FOR PROTECTING LASER DEVICE**

(30) Priority: 04.07.2024 CN 202410890990
(71) Applicant: Shenzhen Hingin Technology Co., Ltd., Shenzhen, Guangdong 518000 (CN)
(72) Inventor: LIN, Jing, Shenzhen, 518000 (CN); MENG, Haiqiang, Shenzhen, 518000 (CN); XIE, Qingpeng, Shenzhen, 518000 (CN); HUANG, Fujin, Shenzhen, 518000 (CN); ZHANG, Shuai, Shenzhen, 518000 (CN); ZHOU, Meng, Shenzhen, 518000 (CN); WEI, Penghui, Shenzhen, 518000 (CN)
(74) Representative: Metida

(57) **Abstract**

A method and a protective apparatus for protecting a laser device (2) are provided. By connecting the laser device (2) to a protective housing (1) to safeguard laser engraving operations, safety during a laser engraving process is enhanced. Furthermore, a support plate (111) of the protective apparatus is capable of vertically moving, thereby enabling the protective housing (1) to adapt to objects of varying heights and different types of the laser device to consistently achieve laser engraving within an optimal engraving focal range, an applicability scope of the protective apparatus is expanded, and user experience is further improved. Additionally, two guide structures are respectively disposed a left side of the support plate (111) and a right side of the support plate (111) to drive the support plate (111) to vertically move, thereby ensuring stable vertical movement during the laser engraving process, yielding superior engraving results with enhanced precision.

## Description

### TECHNICAL FIELD

The present disclosure relates to the field of laser device protection, and in particular to a method and a protective apparatus for protecting a laser device.

### BACKGROUND

With the advancement of laser technology, laser engraving technology has become increasingly widespread. Generally, types of lasers include gas lasers, chemical lasers, metal vapor lasers, solid-state lasers, and semiconductor lasers. A principle of laser engraving involves using a laser beam as a heat source, focusing the laser beam onto a surface of a workpiece in an extremely short time, and releasing energy. The released energy generates heat on the surface of the workpiece, causing localized melting of the workpiece. By moving a position of the laser beam, a purpose of engraving the workpiece is achieved. Current laser devices often lack effective protective mechanisms during use. Exposed lasers may easily cause harm to humans, posing safety hazards. Furthermore, as compliance requirements for laser engraving machines in the European Union and the United States become increasingly stringent, laser engraving products without fully enclosed compliant protective covers may not be permitted for sale on the market. For each laser device equipped a protective mechanism, the laser device is typically enclosed within a protective housing, resulting in an increased overall size of a protective apparatus that is inconvenient to carry and makes replacing the laser device difficult.

Chinese Patent Publication No. CN117020426A discloses a portable small laser engraving device with a protective cover, including a device case, pin holes, a bottom base, a Y-axis assembly, X-axis assemblies, the protective cover, a device compartment, and servo motors. The bottom base is disposed below the device case, guide rods are disposed at four corners of an upper surface of the bottom base, the pin holes are defined at four corners of the device case, and a control panel and a data interface module are embedded in an inner wall at a top portion of the device compartment. A storage groove is defined at an edge of a lower surface of the device case, and the protective cover is disposed in the storage groove. The X-axis assemblies are disposed in a lower end of the device case, the Y-axis assembly is disposed between the X-axis assemblies, and a laser engraving assembly is disposed at a middle position of the Y-axis assembly. The portable small laser engraving device purportedly enables flexible folding of the bottom base and the device case, reducing an overall volume thereof. Combined with the protective cover being retractable and height-adjustable, the portable small laser engraving device ensures an unobstructed laser engraving space while further minimizing a footprint thereof, thus enhancing portability. Although the protective cover in the Chinese Patent Publication No. CN117020426A provides effective protection against laser exposure, a laser head is limited to movement only along X-axis and Y-axis directions, so that a focal point of a laser beam remains fixed and is unsuitable for engraving objects of varying heights or for compatibility with different types of laser engraving devices.

Chinese Patent Publication No. CN220863025U discloses a high-safety laser engraver, including a honeycomb plate module 1, a support frame 2, a laser module 3, and a transparent protective cover 4, the honeycomb plate module 1 is configured to position a product, the support frame 2 is disposed surrounding the honeycomb plate module 1, the laser module 3 is movably disposed on the support frame 2 in an X-Y plane for engraving, and the transparent protective cover 4 covers the support frame 2 and is configured to filter laser radiation. An openable cover plate 40 is hinged to an upper surface of the transparent protective cover 4, and a first micro-switch 400 is disposed on the transparent protective cover 4 and is configured to control the laser module 3 to stop operating when the openable cover plate 40 is opened. Such approach employs the transparent protective cover 4 covering the support frame 2, allowing users to observe laser processing in real-time while filtering out harmful laser radiation that may cause eye irritation, thereby purportedly significantly enhancing safety of laser engraving. The Chinese Patent Publication No. CN220863025U places a laser engraving machine inside the transparent protective cover for laser protection, resulting in an increased overall size of the high-safety laser engraver that is inconvenient to carry. Moreover, replacing the laser engraving machine requires opening the transparent protective cover, which is inconvenient.

### SUMMARY

A technical problem addressed by the present disclosure lies in that current laser devices lack effective protective mechanisms during use, leading to exposed laser beams that pose safety hazards and risks of injury to users; while systems equipped with protective mechanisms typically houses a laser device body inside a protective device, resulting in an increased overall size of the protective device that is inconvenient to carry and relatively difficult to replace. In view of the above drawbacks of the prior art, the present disclosure provides a method and a protective apparatus for protecting a laser device.

In order to address the technical problem, technical solutions adopted by the present disclosure are as follows.

The present disclosure provides the method for protecting the laser device, including connecting the laser device to a protective apparatus, directing laser beams emitted by the laser device into the protective apparatus, and performing laser engraving on an object to be engraved in the protective apparatus; adjusting an engraving position by the protective apparatus according to a height of the object to be engraved and the laser device to position the object to be engraved within an engraving focal range.

Specifically, the laser device is connected to the protective apparatus from an external position of the protective apparatus and emits the laser beams into the protective apparatus to perform the laser engraving on the object to be engraved in the protective apparatus.

The above method enables the laser engraving to perform in the protective apparatus, ensuring no laser exposure during operation of the laser device, thereby enhancing engraving safety. Additionally, vertical movement of the object to be engraved in the protective apparatus allows the protective apparatus to adapt to different types of the laser device, consistently positioning the object to be engraved within the engraving focal range for superior engraving results. Simultaneously, since the laser device is connected to the protective apparatus from the external position of the protective apparatus, the protective apparatus achieves a more compact volume for easier portability, facilitates replacement of the laser device, and further enables compatibility with different types of the laser device.

Furthermore, the adjusting the engraving position by the protective apparatus according to the height of the object to be engraved and the laser device to position the object to be engraved within the engraving focal range includes adjusting a position of the object to be engraved by the protective apparatus according to different heights of a surface of the object to be engraved and/or different types of the laser device to position an engraving surface of the object to be engraved within a laser engraving range.

The above method adjusts the position of the object to be engraved based on height variations of the object to be engraved and different types of the laser device, ensuring objects of varying heights remain within an optimal engraving focal range of the laser device while accommodating engraving focal lengths of different types of the laser device. In this way, an applicability scope of the method for protecting the laser device is expanded and user experience is enhanced.

Furthermore, the adjusting the position of the object to be engraved by the protective apparatus according to different heights of the surface of the object to be engraved and/or different types of the laser device to position the engraving surface of the object to be engraved within the laser engraving range includes vertically moving a support device supporting the object to be engraved while maintaining parallel alignment to adjust the engraving surface of the object to be engraved to be within the optimal engraving focal range of the laser device.

The above method maintains flatness of an object-supporting surface of the support device within a designated precision tolerance, preventing the engraved object from tilting caused by deviation from a center position of the support device to compromise engraving quality. Moreover, maintaining the parallel alignment of the support device in a vertical direction additionally improves engraving precision.

Furthermore, the connecting the laser device to the protective apparatus, directing the laser beams emitted by the laser device into the protective apparatus, and performing the laser engraving on the object to be engraved in the protective apparatus includes ceasing emission of engraving the laser beams by the laser device when at least one of conditions, including detecting abnormal installation connection between the protective apparatus and the laser device, detecting an abnormal state and/or an open state of the protective apparatus, and detecting a condition in which the object to be engraved and/or an engraved object fails to move a designated position while exhibiting abnormal vertical movement, occurs.

Specifically, the abnormal state of the protective apparatus includes one or a combination of an abnormal internal temperature of the protective apparatus, an abnormal installation state of the protective apparatus, and an alarm sound emitted by the protective apparatus.

Specifically, the detecting the condition in which the object to be engraved and/or the engraved object fails to move the designated position while exhibiting the abnormal vertical movement includes the object to be engraved and/or the engraved object stopping vertical movement or exhibiting the abnormal vertical movement during the laser engraving without moving into the optimal engraving focal range.

The above method enhances operational safety during the laser engraving by incorporating multiple predefined scenarios, effectively preventing unexpected incidents and significantly improving operational security.

The present disclosure further provides the protective apparatus for protecting the laser device, including a protective housing. The protective housing is connected to the laser device, an object to be engraved is placed in the protective housing, the laser device is connected to the protective housing and is configured to perform the laser engraving on the object to be engraved in the protective housing to obtain the engraved object, and the engraved object is removed from the protective housing after the laser engraving. The support device is disposed in the protective housing, the object to be engraved is placed on the support device, and the support device is configured to vertically move to position the engraving surface of the object to be engraved at a laser focus point of the laser device for the laser engraving.

The above structure of the protective apparatus enables the laser engraving to perform in the protective apparatus, ensuring no laser exposure during the operation of the laser device, thereby enhancing engraving safety. Additionally, the vertical movement of the object to be engraved in the protective apparatus allows the protective apparatus to adapt to different types of the laser device, consistently positioning the object to be engraved within the engraving focal range for the superior engraving results.

Furthermore, the protective apparatus further includes at least one guide structure to drive the support device to vertically move, the support device includes a support plate for supporting the object to be engraved and a movable adapter module for connecting the support plate and the at least one guide structure, and the at least one guide structure drives the movable adapter module to vertically move to further drive the support plate to vertically move.

The above structure of the protective apparatus adjusts the position of the object to be engraved based on the height variations of the object to be engraved and different types of the laser device, ensuring the objects of varying heights remain within the optimal engraving focal range of the laser device while accommodating engraving focal distances of different types of the laser device. In this way, the applicability scope of the protective apparatus for protecting the laser device is expanded and the user experience is enhanced.

Furthermore, the movable adapter module includes at least one support plate adapter, the movable adapter module and/or the at least one support plate adapter adjusts flatness of a surface of the support plate and drives the support plate to vertically move within a designated flatness range.

The above structure of the protective apparatus maintains flatness of the surface of the support plate within a designated precision tolerance, preventing tilting of the support plate when the users place the engraved object off-center to compromise engraving quality to compromise engraving quality. Moreover, maintaining parallel alignment of the support plate in the vertical direction additionally improves engraving precision.

Furthermore, the at least one guide structure includes a guide mechanism and a drive mechanism, the drive mechanism is disposed corresponding to the guide mechanism, the guide mechanism is connected to the movable adapter module, and the drive mechanism drives the movable adapter module to vertically move along the guide mechanism to further drive the support plate to vertically move. The guide mechanism further includes a linear guide module, the linear guide module is connected to the movable adapter module, the movable adapter module moves along the linear guide module to drive the support plate to vertically move and further reduces resistance during movement of the support plate.

According to the above structure of the protective apparatus, the guide devices achieves vertical reciprocating motion through the at least one guide structure. The at least one guide structure is configured according to required strength and precision for specific user scenarios. Bearing modules are disposed on both sides of the at least one guide structure to reduce resistance during straight-line motion or linear motion of the at least one guide structure, thereby achieving higher movement precision.

Furthermore, the protective housing further includes a top plate, and the laser device is connected to an outer wall of the protective housing through the top plate. A bottom plate assembly is disposed at a bottom portion of the protective housing, the bottom plate assembly is configured to provide support force for the protective housing, and a sealing structure is disposed on the bottom plate assembly.

According to the above structure of the protective apparatus, the laser device is externally connected to the protective housing, the protective housing achieves a more compact volume for easier portability, facilitates replacement of the laser device, and further enables compatibility with different types of the laser device. Simultaneously, the bottom plate assembly provides foundational support for the at least one guide structure, enhancing precision of the parallel alignment of the support plate in the vertical direction. Moreover, the sealing structure connected to the bottom plate assembly prevents laser radiation leakage.

Furthermore, the bottom plate assembly further defines an exhaust port, the exhaust port is communicated with an interior of the protective housing, and the exhaust port is configured to exhaust gases and debris generated during the laser engraving. Internal baffle plates are disposed in the protective housing, the support device is disposed between the internal baffle plates. Isolation structures are respectively disposed on the internal baffle plates, and a collection module is disposed in the protective housing for collecting a state of the engraved object. A limit structure is further disposed in the protective housing, and the limit structure is configured to stop movement of the support device when the support device moves to a limiting position. A baffle plate is disposed on at least one of a first side surface of the protective housing and a second side surface of the protective housing, and upon opening the baffle plate, the engraved object in the protective housing is removed and the object to be engraved is placed therein. A light strip is disposed in the protective housing. An adapter is disposed on a third side surface of the protective housing, and the adapter is configured to connect external functional devices to the protective housing. A monitor module is further disposed in the protective housing, and the monitor module is configured to detect the engraved object and an engraving state.

According to the above structure of the protective apparatus, the bottom plate assembly defines the exhaust port for exhausting engraving debris and gases from the protective housing. The isolation structures separate and protect the at least one guide structure from being affected by smoke, oil fumes, and debris generated during the laser engraving, thereby enhancing durability of the protective housing. The monitor module employs camera-based collection to capture engraving processes, depth, position, and range information, which achieves automatic focusing and automatic engraving range layout, thereby significantly enhancing the user experience.

Beneficial effects of the present disclosure are as follows.

By connecting the laser device to the protective housing to safeguard laser engraving operations, safety during a laser engraving process is enhanced. Furthermore, the support plate of the protective apparatus is capable of vertically moving, thereby enabling the protective housing to adapt to the objects of varying heights and different types of the laser device to consistently achieve the laser engraving within the optimal engraving focal range, the applicability scope of the protective apparatus is expanded, and the user experience is further improved. Additionally, two guide structures are respectively disposed a left side of the support plate and a right side of the support plate to drive the support plate to vertically move, thereby ensuring stable vertical movement during the laser engraving process, yielding superior engraving results with enhanced precision. Moreover, externally connecting the laser device to the protective housing achieves a more compact volume for improved portability while facilitating interchangeability among different types of the laser device. Concurrently, detection modules are disposed in the protective housing for detecting operational states of the protective housing, which improves safety performance of the protective apparatus, enhances the user experience, and further extends a service life of the protective apparatus.

### BRIEF DESCRIPTION OF DRAWINGS

In order to more clearly illustrate embodiments of the present disclosure or technical solutions in the prior art, the present disclosure is further described below with reference to accompanying drawings and embodiments, and the accompanying drawings in following description are merely some embodiments of the present disclosure. For those who skilled in the art, other drawings may be obtained according to these drawings without creative efforts.
FIG. 1 is a structural schematic diagram illustrating a first connection method of a protective housing and a laser device according to one embodiment of the present disclosure.
FIG. 2 is a structural schematic diagram illustrating a second connection method of the protective housing and the laser device according to one embodiment of the present disclosure.
FIG. 3 is a front axonometric structural schematic diagram illustrating connection between the protective housing and the laser device.
FIG. 4 is a partial exploded schematic diagram illustrating the connection between the protective housing and the laser device.
FIG. 5 is a rear axonometric structural schematic diagram illustrating connection between the protective housing and the laser device.
FIG. 6 is a structural schematic diagram of a protective apparatus with a front baffle plate in an open state according to one embodiment of the present disclosure.
FIG. 7 is a structural schematic diagram of an indicator light panel and a fan module of the protective apparatus with the front baffle in the open state according to one embodiment of the present disclosure.
FIG. 8 is a structural schematic diagram of the front baffle plate and a rear baffle plate both in an open state according to one embodiment of the present disclosure.
FIG. 9 is a structural schematic diagram illustrating connection between the rear baffle plate and an outer housing according to one embodiment of the present disclosure.
FIG. 10 is an axonometric structural schematic diagram of an inner bottom plate according to one embodiment of the present disclosure.
FIG. 11 is another axonometric structural schematic diagram of the inner bottom plate according to one embodiment of the present disclosure.
FIG. 12 is a structural schematic diagram illustrating installation of a left guide structure according to one embodiment of the present disclosure.
FIG. 13 is a structural schematic diagram of connection among a steel shaft, a linear bearing, and a movable adapter according to one embodiment of the present disclosure.
FIG. 14 is an enlarged structural schematic diagram of portion B shown in FIG. 3.
FIG. 15 is a structural schematic diagram illustrating installation of a right guide structure according to one embodiment of the present disclosure.
FIG. 16 is a structural schematic diagram illustrating connection between the movable adapter and a support plate adapter according to one embodiment of the present disclosure.
FIG. 17 is a structural schematic diagram of the support plate adapter according to one embodiment of the present disclosure.

### DETAILED DESCRIPTION OF EMBODIMENTS

In order to make objectives, technical solutions, and advantages of embodiments of the present disclosure clearer, the following clearly and completely describes the technical solutions in the embodiments of the present disclosure. Apparently, the described embodiments are some but not all of the embodiments of the present disclosure. All other embodiments obtained by those who skilled in the art based on the embodiments of the present disclosure without creative efforts shall fall within a protection scope of the present disclosure.

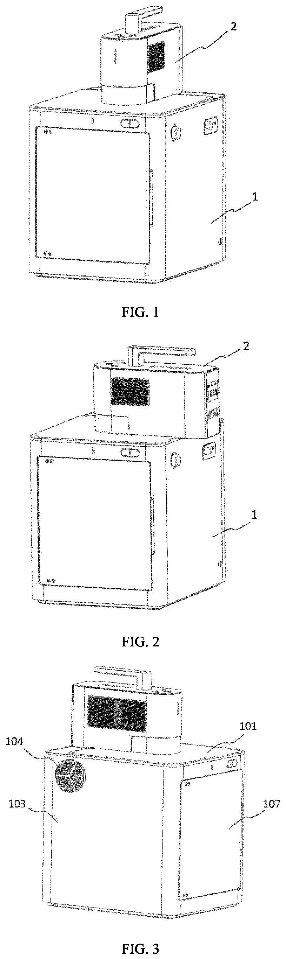

The embodiments of the present disclosure provide a protective apparatus for protecting a laser device 2, as shown in FIGS. 1-2, the laser device 2 is fixed to the protective housing 1 for combined operation, ensuring all laser beams enter the protective housing during operation to perform laser engraving on an object to be engraved placed therein. Such configuration provides protective effect during the laser engraving and enhances operational safety.

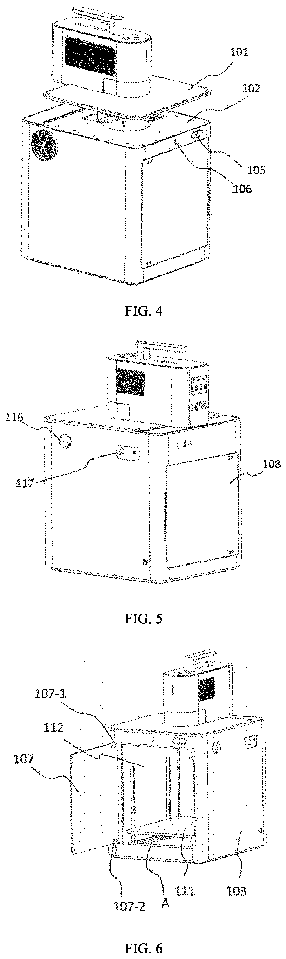

Specifically, as shown in FIGS. 2-4, the protective housing 1 includes a top plate 101 connected to the laser device 2 and an outer housing 103 disposed below the top plate 101, a top bearing plate 102 is disposed at an upper end of the outer housing 103, and the top plate 101 disposed on the top bearing plate 102 to connect the laser device 2 with the protective housing 1. As shown in FIG. 3 and FIG. 5, a front baffle plate 107 and a rear baffle plate 108 are respectively disposed on a front side of the protective housing 1 and a rear side of the protective housing 1, and both the front baffle plate 107 and the rear baffle plate 108 are openable and closable to remove an engraved object and place an object to be engraved. A support plate 111 is disposed in the outer housing 103 of the protecting housing 1, the support plate 111 enables vertical movement, when the object to be engraved is placed on the support plate 111 for the laser engraving, the support plate 111 vertically moves to accommodate engraving focal lengths of different types of the laser device 2, so as to ensure objects of varying heights remain within an optimal engraving focal range of the laser device 2 while accommodating the engraving focal lengths of different types of the laser device 2. In this way, an applicability scope of the protective apparatus is expanded, and user experience is further improved. As shown in FIG. 4, a button panel 105 and an indicator light panel 106 are disposed on a first side surface of the protective housing 1. The button panel 105 includes an upper button and a lower button for controlling the vertical movement of the support plate 111. The indicator light panel 106 displays operational status of the protective housing 1 and communication status with the laser device 2 through varying colors and blinking patterns. Specific indicator effects are not detailed herein, as all implementations shall fall within a protection scope of the present disclosure.

Furthermore, as shown in FIG. 3, to enhance functionality of the protective housing 1, an adapter 104 is disposed on a third side surface of protective housing 1, and the adapter 104 is an outer housing adapter 104. The outer housing adapter 104 is connected to an air pump through an air hose, enabling gases and impurities generated during the laser engraving inside the protective housing 1 to be extracted by the air pump, thereby purifying an internal air environment of the protective housing 1. As shown in FIG. 5, a power switch 116 is disposed on the outer housing 103 to control power activation/deactivation of the protective housing 1. Additionally, a fire suppression device interface 117 is further disposed on the outer housing 103 for connecting to an external fire suppression device. When fire or excessive temperature occurs inside the protective housing 1 during the laser engraving, internal sensors of the protective housing 1 is engaged to trigger automatic shutdown of the laser device 2, and a buzzer disposed in the protective housing 1 is activated to emit an alarm sound. At this point, the laser device 2 is shut down for inspection, or the external fire suppression device is manually or electrically activated to achieve a fire extinguishing function, thereby enhancing operational security of the protective housing 1. The protective housing 1 further includes a power supply port and a communication port on a side surface and a rear surface thereof for respectively connecting to an external power supply and communicating with an external device, thereby ensuring communication and power supply between the laser device 2 and the protective housing 1.

Furthermore, as shown in FIG. 4, to enable the protective housing 1 to adapt to different types of the laser device 2, the laser device 2 is connected to the protective housing 1 after connecting to the top plate 101. At least one Hall sensor is disposed on the laser device, and at least one magnet is disposed on the top plate 101 at a position corresponding to the at least one Hall sensor. After the top plate 101 is fixed to the laser device 2, the at least one Hall sensor detects an installation status between the top plate 101 and the laser device 2 and feeds the installation status back to a main control system. As a result, the main control system is capable of determining the installation status between the top plate 101 and the laser device 2. Only when the main control system detects that the installation status between the top plate 101 and the laser device 2 is proper will the laser device 2 be allowed to operate. Alternatively, other types of sensors may be used in place of the at least one Hall sensor to detect the installation status between the top plate 101 and the laser device 2, and such alternatives are also within the protection scope of the present disclosure. Furthermore, the laser device 2 is configured to emit laser beams for laser engraving only when the main control system confirms that the installation status between the top plate 101 and the laser device 2 is proper. In some embodiments, a fool-proof structure is disposed on the top plate 101 to facilitate the connection between the laser device 2 and the top plate 101, thereby enabling the top plate 101 to adapt to different types of the laser device 2. An upper end of the top plate 101 is connected to the laser device 2, while a lower end of the top plate 101 is simultaneously connected to the top bearing plate 102, connection between the top plate 101 and the laser device 2 and connection between the top plate 101 and the top bearing plate 102 are implemented in a detachable manner using bolts, snap-fit mechanisms, or other fastening methods. Additionally, an installation status detection unit is disposed between the top bearing plate 102 and the top plate 101. Only when the installation status detection unit confirms that an installation status between the top bearing plate 102 and the top plate 101 is proper will the installation status be fed back to the main control system, and then the main control system accordingly performs corresponding operations. To allow the laser device 2 to be used in a variety of scenarios, a connection angle between the top plate 101 and the top bearing plate 102 is adjustable. Magnets are provided and are disposed on the top plate 101 at different angular positions, while a single set of Hall sensors is disposed on the top bearing plate 102. As a result, the top plate 101 and the top bearing plate 102 are capable of being designed in different shapes, such as triangular, square, or hexagonal configurations, allowing the top plate 101 to connect with the top bearing plate 102 at different angles and thus enhancing ease and flexibility of connection.

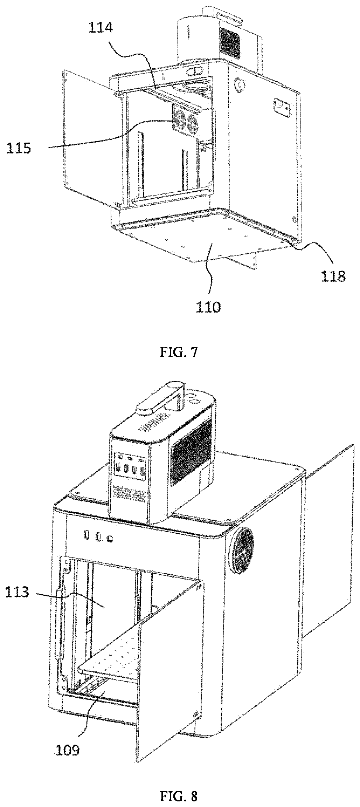

Furthermore, as shown in FIG. 7, a light strip 114 is disposed at a lower end of the top bearing plate 102 to provide internal illumination for the protective housing 1. In some embodiments, a camera module is disposed on the top bearing plate 102, and the light strip 114 concurrently supplies photographic lighting for the camera module, so as to further improve the user experience. The camera module not only captures positional calibration data of the engraved object but also collects depth, position, and engraving area information, thereby achieving automated focusing and intelligent engraving area layout. In this way, the user experience is further improved.

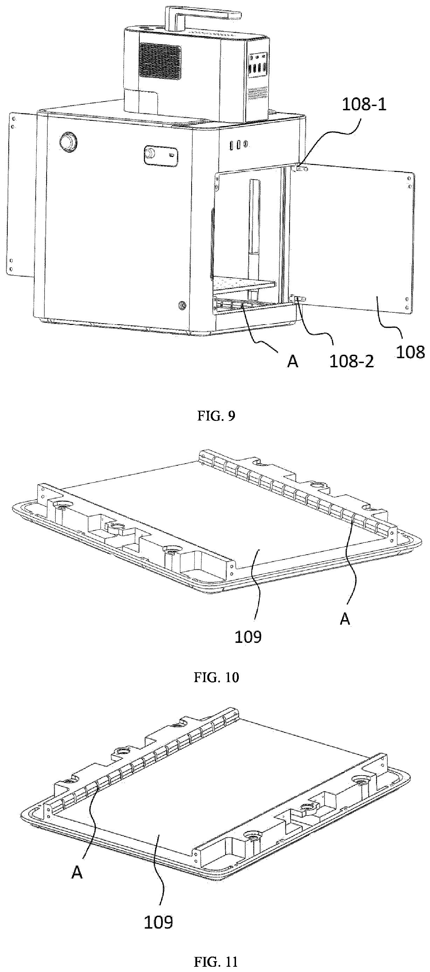

Furthermore, as shown in FIG. 6, the front baffle panel 107 is connected to the top bearing plate 102 through a first hinge structure 107-1 and a second hinge structure 107-2. The first hinge structure 107-1 and the second hinge structure 107-2 are vertically arranged, with one above the other. A first end of the first hinge structure 107-1 is connected to the top bearing plate 102, and a second end of the first hinge structure 107-1 is connected to the front baffle panel 107. The front baffle panel 107 is rotatable about pivot axes of the first hinge structure 107-1 and the second hinge structure 107-2, thereby enabling opening and closing movement of the front baffle panel 107. The at least one Hall sensor is disposed on the outer housing 103, and the at least one magnet is disposed on the front baffle panel 107 at the position corresponding to the at least one Hall sensor. When the front baffle panel 107 is in an open position or a closed position, a distance between the at least one magnet and the at least one Hall sensor changes, thereby enabling detection of an open/closed state of the front baffle panel 107. Alternatively, other types of sensors may also be employed for detecting a position status between the front baffle panel 107 and the outer housing 103. When the front baffle panel 107 is in the open position, the main control system detects that the front baffle panel 107 is open and then automatically shuts off laser emission from the laser device 2 to prevent accidental laser exposure, thereby enhancing safety during use. The front baffle panel 107 and the outer housing 103 are connected by using magnetic components (e.g., magnets or magnetic sheets), so that the front baffle panel 107 remains securely closed against the outer housing 103 when the front baffle panel 107 is in the closed position. Alternatively, snap-fit mechanisms or other latching structures are employed to maintain a secure closure between the front baffle panel 107 and the outer housing 103. Additionally, in some embodiments, sealing structures, such as rubber gaskets or brush structures, are disposed on the front baffle panel 107 to prevent laser radiation leakage during operation. As shown in FIG. 9, a principle of connection between the rear baffle plate 108 and the outer housing 103 and a principle of connection between the front baffle plate 107 and the housing 103 are the same, which are not repeated herein.

Furthermore, as shown in FIG. 8, a bottom plate assembly is disposed at a bottom portion of the protective housing 103, the bottom plate assembly includes an inner bottom plate 109 and an outer bottom plate 110. The outer base plate serves as a contact surface for placing the protective housing 1 on a tabletop or a work surface. Such design provides anti-slip and wear-resistant properties, while also preventing the laser radiation leakage.

As shown in FIGS. 10-11, slot structures A are respectively disposed at a left side and a second side of the inner bottom plate 109. A channel communicating with the slot structures A is disposed between the outer bottom plate 110 and the inner bottom plate 109. Additionally, the outer bottom plate 110 defines an exhaust port, thereby forming an airflow passage in the protective housing 1 to exhaust engraving debris and gases from the protective housing 1. Alternatively, the engraving debris and gases generated during the laser engraving are removed through an external pump or by connecting a fan module 115 to the outer housing adapter 104. The fan module is configured to be connected in a fixed or quick-release manner, facilitating easy installation and removal of the fan module. It should be noted that when the engraving debris and gases are expelled from the airflow passage, the exhaust port at the bottom portion of the outer bottom plate 110 is designed as an open slot or equipped with a connector for exhausting the engraving debris and gases from the protective housing 1.

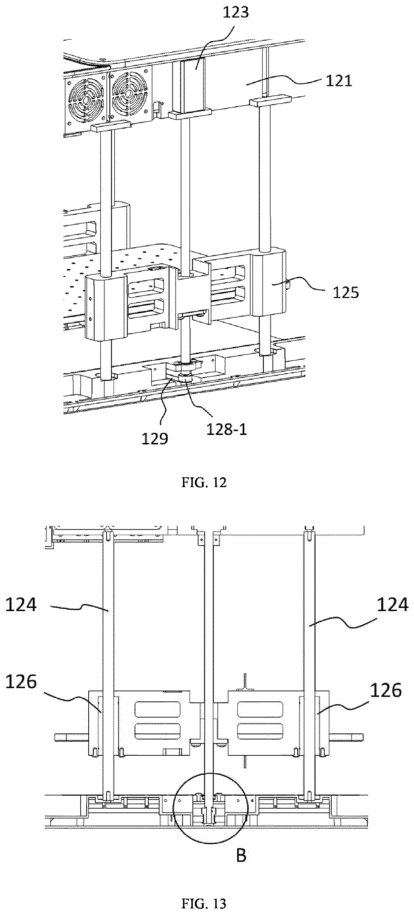

Furthermore, as shown in FIGS. 12-14, movable adapters 125 are disposed in the protective housing 1, the movable adapters 125 are connected to the support plate 111. The movable adapters 125 are respectively disposed at a left inner side and a right inner side of the protective housing 1, and a left side and a right side of the support plate 111 are respectively disposed on the movable adapters 125. Guide structures for driving the support plate 111 to vertically move are further disposed at the left inner side and the right inner side of the protective housing 1, and at the same time, the inner bottom plate 109 provides support force for the guide structures respectively at the left inner side thereof and the right inner side thereof and is connected to the outer housing 103 to further provide the support force for the outer housing 103. The guide structures includes a left guide structure and a right guide structure. The left guide structure includes a left motor fixing plate 121 connected to the top bearing plate 102, a first one of lead screw motors 123 is disposed on the left motor fixing plate 121, bearings 127 are disposed on the inner bottom plate 109 corresponding to the lead screw motors 123, a first end of each of the lead screw motors 123 passes through a corresponding one of the bearings 127 and is rotatably matched with the corresponding one of the bearings 127, thereby reducing rotational resistance of the lead screw motors 123. Furthermore, a first synchronous pulley 128-1 is disposed at a bottom portion of each of the lead screw motors 123 and coaxially rotates therewith. Two steel shafts 124 are disposed at a left side and a right side of each of the lead screw motors 123. Upper ends of corresponding two steel shafts 124 are fixed to the left motor fixing plate 121, and lower ends of the corresponding two steel shafts 124 are fixed to the inner bottom plate 109. Linear bearings 126 are respectively disposed on each two steel shafts 124. Cooperation between each two steel shafts and corresponding linear bearings 126 reduces resistance during reciprocating linear motion. The lead screw motors 123 are respectively connected to the movable adapters 125 through lead screw nuts, while the linear bearings 126 are further respectively connected to the movable adapters 125. Such configuration causes each of the movable adapters 125 to smoothly reciprocate along corresponding two steel shafts 124 when a corresponding one of the lead screw motors 123 rotates, thereby driving the support plate 111 to smoothly reciprocate. Consequently, a position of the support plate 111 is adjustable according to a specific height of the engraved object, ensuring the objects of varying heights remain within the optimal engraving focal range of the laser device 2. Such design accommodates the engraving focal lengths of different types of the laser device 2. Additionally, the incorporation of the lead screw motors 123 enables achievement of the movement precision required by design specifications. It should be noted that, alternative guide structures, such as linear guides or dual-axis linear guides, may be employed in place of corresponding two steel shafts 124 and the linear bearings 126, all of which shall fall within the protection scope of the present disclosure. The right guide structure is identical to the left guide structure described above, and therefore is be redundantly elaborated herein. It should be noted, however, that due to presence of synchronous pulleys and a synchronous belt 129, vertical reciprocating motion is alternatively implemented using either a single motor with a single guide mechanism on one side or a single motor with dual guide mechanisms on one side, depending on required strength and precision for specific user scenarios. The heavier the engraved object, the more suitable the configuration employing dual motors with dual guide mechanisms becomes.

It should be noted that in the present disclosure, a drive mechanism employs the lead screw motors 123. During operation, rotation of the lead screw motors drives the movable adapters 125 to vertically move. Such motion is guided by guide mechanisms, such as the linear guides, the linear bearings 126, or the dual-axis linear guides to maintain smoothness and precision throughout the movement. Alternatively, in some embodiments, the lead screw motors 123 are connected to other transmission mechanisms, including but not limited to transmission linkages or gear drives, the lead screw motors 123 rotate to drive corresponding transmission mechanisms to move. During operation of the lead screw motors 123, the corresponding transmission mechanisms actuate the movable adapters 125 connected thereto for vertical displacement. Such implementations shall likewise fall within the protection scope of the present disclosure. Concurrently, while the drive mechanism described herein utilizes the lead screw motors 123, other drive mechanisms may be configured to actuate the guide mechanisms for driving vertical movement of the support plate 111. Additionally, the support plate 111 may also be moved by manually driving the guide structures. Any conventional mechanical or manual driving method capable of actuating the guide structures to realize vertical movement of the support plate 111 shall fall within a protection scope of the drive mechanism as defined by the present disclosure.

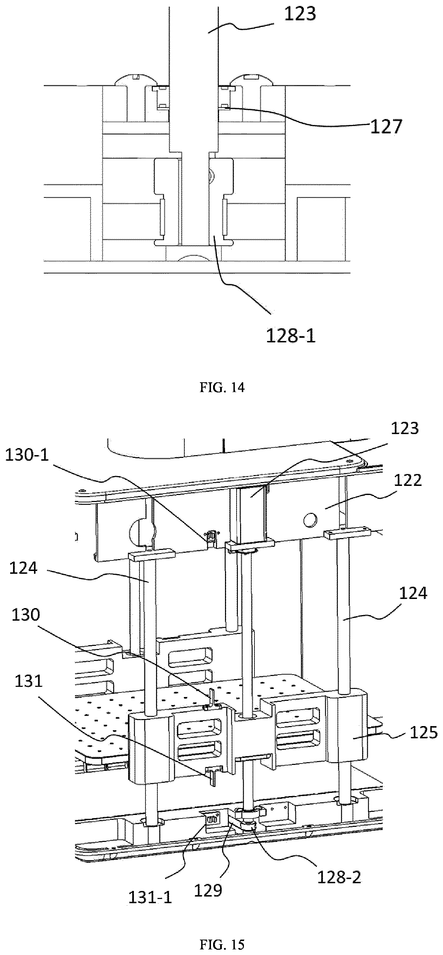

Further, as shown in FIG. 15, the first synchronous pulley 128-1 and a second synchronous pulley 128-2 are connected through the synchronous belt 129, so that the lead screw motors 123 at opposite inner sides of the protective housing 1 remain synchronized during rotation, which ensures that the flatness of the support plate 111 remains within a designated precision tolerance during movement, preventing tilting of the support plate 111 when users place the engraved object off-center to compromise engraving quality. Meanwhile, transmission jamming or motor stalling caused by such tilting is also prevented.

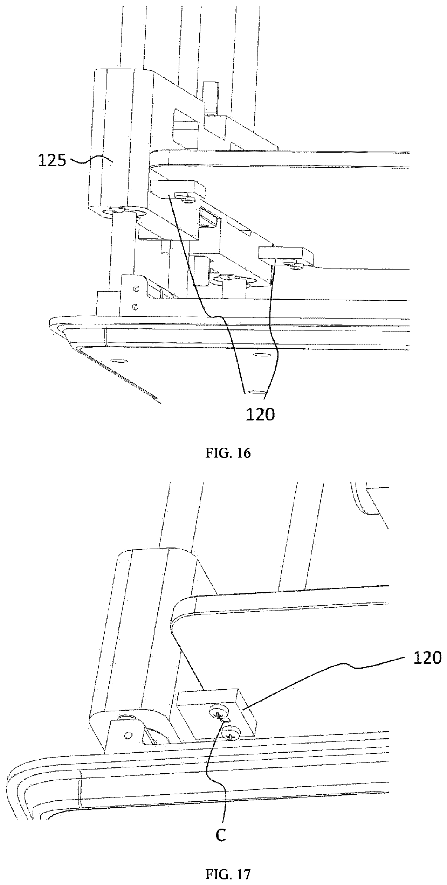

Further, as shown in FIGS. 16-17, support plate adapters 120 are respectively disposed on the movable adapters 125. The support plate 111 is connected to the support plate adapters 120. The guide mechanisms drive the movable adapters 125 to vertically move to further vertically move the support plate adapters 120, thereby driving the support plate 111 to vertically move. However, during machine assembly and commissioning, the left guide structure and the right guide structure are first leveled. Subsequently, the support plate 111 is fixedly connected to the movable adapters 125 through the support plate adapters 120. Each of the support plate adapters 120 defines threaded holes C, allowing bolts to be threaded therein. By adjusting an insertion depth of the bolts, a gap between each of the support plate adapters 120 and the support plate 111 is controlled. Through precise adjustment of each gap between the support plate adapters 120 and the support plate 111, the flatness of the support plate 111 is adjusted, thereby ensuring that the flatness of the support plate 111 meets required specifications after mass production and installation and improving engraving precision. The vertical movement of the support plate 111 allows the objects of varying heights to remain within the optimal engraving focal range of the laser device 2. Such compatibility with the engraving focal lengths of different types of the laser device 2 further expands the applicability scope of the protective apparatus and enhances the user experience. Each of the movable adapters 125 and a corresponding one of the support plate adapters 120 are formed as an integral structure or a detachable structure.

It should be noted that the lead screw motors 123 at the opposite inner sides of the protective housing 1 need not achieve synchronized motion through connection among the first synchronous pulley 128-1, the second synchronous pulley 128-2, and the synchronous belt 129. Instead, detection modules are employed to monitor operational states of the lead screw motors 123. A correction algorithm may then be implemented to maintain relative consistency in the operational states between the lead screw motors 123, thereby ensuring the flatness of the support plate 111 remains within the designated precision tolerance during the movement. Such approach eliminates a need to level the left guide structure and the right guide structure during the machine assembly and commissioning prior to fixedly connecting the support plate 111 to the movable adapters 125 through the support plate adapters 120. Nevertheless, each of the support plate adapters 120 may retain the threaded holes C, allowing the bolts to be threaded therein. By adjusting the insertion depth of the bolts, the gap between each of the support plate adapters 120 and the support plate 111 is controlled. Through precise adjustment of each gap between the support plate adapters 120 and the support plate 111, the flatness of the support plate 111 is adjusted, thereby ensuring that the flatness of the support plate 111 meets the required specifications after mass production and installation and improving the engraving precision.

Regardless of the implementation approach, providing the threaded holes C on each of the support plate adapters 120 constitutes a non-essential feature. Its inclusion may be determined through comprehensive evaluation based on precision requirements of specific engraving applications, manufacturing tolerances of system components during mass production, and assembly accuracy constraints.

Furthermore, as shown in FIG. 15, limit switch actuators are respectively disposed on an upper side and a lower side of one of the movable adapters 125. The limit switch actuators include an upper limit actuator 130 and a lower limit actuator 131. An upper limit switch sensor 130-1 is disposed on a right motor fixing plate 122 corresponding to the upper limit switch actuator 130. Similarly, a lower limit switch sensor 131-1 is disposed on the inner bottom plate 109 corresponding to the lower limit switch actuator 131. During upward movement of the support plate 111, when the upper limit switch actuator 130 engages the upper limit switch sensor 130-1, the lead screw motors 123 stop rotating, at this point, the support plate 111 reaches an uppermost travel limit. Conversely, during downward movement of the support plate 111, when the lower limit switch actuator 131 engages the lower limit switch sensor 131-1, the lead screw motors 123 stop rotating, positioning the support plate 111 at a lowermost travel limit. Alternatively, in some embodiments, the limit switch actuators are respectively disposed on a left side and a right side of the one of the movable adapters 125, which implementation shall likewise fall within the protection scope of the present disclosure.

Furthermore, a stall detection sensor is disposed on one of the lead screw motors 123. When a load placed on the support plate 111 interferes with an inner cavity of the protective housing 1 during movement to cause the support plate 111 to halt or undergo velocity variation, the stall detection sensor is activated. Upon activation of the stall detection sensor, the main control system issues a command to stop the rotation of the lead screw motors 123, thereby ensuring operational safety of the protective housing 1. Alternatively, in some embodiments, the stall detection sensor is replaced with other types of sensors capable of detecting changes in a vertical movement speed of the support plate 111. When such a sensor detects a sudden change or complete stop in the vertical movement of the support plate 111, it is determined that an abnormality occurs in the vertical movement of the support plate 111, and the main control system is triggered to stop the rotation of the lead screw motors 123.

Furthermore, as shown in FIG. 8, a left baffle plate 112 and a right baffle plate 113 are disposed at the left inner side and the right inner side of the protective housing 1. Brush assemblies or cushioning structures are provided at exposed gaps of the left baffle plate 112 and the right baffle plate 113 to isolate smoke, oil fumes, and debris generated during the laser engraving from motion guide systems at the left inner side and the right inner side of the protective housing 1, thereby enhancing durability of the protective housing 1. The left baffle plate 112 and the right baffle plate 113 partition the guide mechanisms from an interior portion of the protective housing 1 without impeding drive functionality of the guide mechanisms. Alternatively, in some embodiments, the left baffle plate 112 and the right baffle plate 113 are replaced with other isolation structures, such as bellows or oil felts, to prevent oil contamination accumulation on the lead screw motors 123, corresponding two steel shafts 124, and the linear bearings 126.

The present disclosure further provides a method for protecting the laser device 2, including implementing the protective apparatus described hereinabove, selecting a corresponding laser device 2 based on material properties of an object to be engraved, externally connecting the corresponding laser device 2 to the protective housing 1, opening a corresponding baffle plate of the protective housing 1 to place the object to be engraved on the support plate 111, and vertically moving the support plate 111 according to a height of the object to be engraved to position an engraving surface of the object to be engraved within an optimal engraving focal range of the corresponding laser device 2. Alternatively, in some embodiments, the method includes deploying an imaging device (e.g., a camera) within the protective housing 1 to capture object height dimensions and object external dimensions, transmitting captured data to a main control system, and driving the support plate 111 to vertically move by the main control system to achieve optimal engraving positioning. The vertical movement of the support plate 111 to position the engraving surface within the optimal engraving focal range includes moving the support plate 111 before engraving begins, to bring the engraving surface into an engraving focal range after the object to be engraved is placed on the support plate 111, and moving the support plate 111 during the laser engraving to maintain the engraving surface within the optimal engraving focal range. Movement of the support plate 111 during the laser engraving is particularly applicable when the engraving surface has varying heights, ensuring that a current engraving area remains within the optimal engraving focal range throughout a laser engraving process.

Furthermore, regarding the vertical movement of the support plate 111, the main control system drives the guide mechanisms to drive the support plate 111 to vertically move, thereby vertically moving the object to be engraved while maintaining parallel alignment. In this way, the support plate 111 vertically moves while maintaining the parallel alignment within the designated precision tolerance. the objects of varying heights are ensured to remain within the optimal engraving focal range of the laser device 2, and the engraving focal lengths of different types of the laser device 2 are accommodated, so as to expand the applicability scope of the method for protecting the laser device.

Furthermore, to enhance safety of the laser device 2 during operation, detection units are disposed in the protective housing 1. The detection units are configured to detect the installation status of the protective housing 1, the open/closed status of a corresponding baffle plate, a movement status of the support plate 111, and the position of the support plate 111. When the main control system receives an abnormal signal from any of the detection units, the main control system triggers the laser device 2 to stop operating. The motion status of the support plate 111 includes aberrant movements that occur during a travel of the support plate 111 toward an optimal engraving position. Such aberrant movements include sudden deceleration or unexpected stopping before reaching the optimal engraving position. Any of these conditions may be recognized as an abnormal state, thereby triggering the main control system to stop the laser engraving.

It should be understood that the present disclosure is described by some embodiments, and those who skilled in the art should know that various changes or equivalent replacements may be made to these features and embodiments without departing from a spirit and scope of the present disclosure. In addition, in view of the teachings of the present disclosure, those who skilled in the art may make modifications to these features and embodiments to adapt them to specific conditions and materials, without departing from the spirit and scope of the present disclosure. Therefore, the present disclosure is not limited to the specific embodiments disclosed herein, and all the embodiments falling within a scope of the appended claims of the present disclosure fall within the protection scope of the present disclosure.

## Claims

1. A method for protecting a laser device (2), comprising:
connecting the laser device (2) to a protective apparatus, directing laser beams emitted by the laser device (2) into the protective apparatus, and performing laser engraving on an object to be engraved in the protective apparatus; and
adjusting an engraving position by the protective apparatus according to a height of the object to be engraved and the laser device (2) to position the object to be engraved within an engraving focal range;
wherein the laser device (2) is connected to the protective apparatus from an external position of the protective apparatus and emits the laser beams into the protective apparatus to perform the laser engraving on the object to be engraved in the protective apparatus.

2. The method for protecting the laser device (2) according to claim 1, wherein the adjusting the engraving position by the protective apparatus according to the height of the object to be engraved and the laser device to position the object to be engraved within the engraving focal range comprises:
adjusting a position of the object to be engraved by the protective apparatus according to different heights of a surface of the object to be engraved and/or different types of the laser device to position an engraving surface of the object to be engraved within a laser engraving range.

3. The method for protecting the laser device (2) according to claim 2, wherein the adjusting the position of the object to be engraved by the protective apparatus according to different heights of the surface of the object to be engraved and/or different types of the laser device (2) to position the engraving surface of the object to be engraved within the laser engraving range comprises:
vertically moving a support device supporting the object to be engraved while maintaining parallel alignment to adjust the engraving surface of the object to be engraved to be within an optimal engraving focal range of the laser device (2).

4. The method for protecting the laser device (2) according to claim 1, wherein the connecting the laser device (2) to the protective apparatus, directing the laser beams emitted by the laser device (2) into the protective apparatus, and performing the laser engraving on the object to be engraved in the protective apparatus comprises ceasing emission of engraving the laser beams by the laser device (2) when at least one of following conditions occurs:
detecting abnormal installation connection between the protective apparatus and the laser device (2);
detecting an abnormal state and/or an open state of the protective apparatus; and
detecting a condition in which the object to be engraved and/or an engraved object fails to move a designated position while exhibiting abnormal vertical movement;
wherein the abnormal state of the protective apparatus comprises one or a combination of an abnormal internal temperature of the protective apparatus, an abnormal installation state of the protective apparatus, and an alarm sound emitted by the protective apparatus;
wherein the detecting the condition in which the object to be engraved and/or the engraved object fails to move the designated position while exhibiting the abnormal vertical movement comprises the object to be engraved and/or the engraved object stopping vertical movement or exhibiting the abnormal vertical movement during the laser engraving without moving into an optimal engraving focal range.

5. A protective apparatus for a laser device, comprising:
a protective housing (1);
wherein the protective housing (1) is connected to the laser device (2), an object to be engraved is placed in the protective housing (1), the laser device (2) is connected to the protective housing (1) and is configured to perform laser engraving on the object to be engraved in the protective housing (1) to obtain an engraved object, and the engraved object is removed from the protective housing (1) after the laser engraving;
wherein a support device is disposed in the protective housing, the object to be engraved is placed on the support device, and the support device is configured to vertically move to position an engraving surface of the object to be engraved at a laser focus point of the laser device for the laser engraving.

6. The protective apparatus for the laser device according to claim 5, wherein the protective apparatus further comprises at least one guide structure to drive the support device to vertically move, the support device comprises a support plate (111) for supporting the object to be engraved and a movable adapter module for connecting the support plate (111) and the at least one guide structure, and the at least one guide structure drives the movable adapter module to vertically move to further drive the support plate (111) to vertically move.

7. The protective apparatus for the laser device according to claim 6, wherein the movable adapter module comprises at least one support plate adapter (120), the at least one support plate adapter (120) is connected to the support plate (111), the movable adapter module and/or the at least one support plate adapter adjusts flatness of a surface of the support plate (111) and drives the support plate (111) to vertically move within a designated flatness range.

8. The protective apparatus for the laser device according to claim 6, wherein the at least one guide structure comprises a guide mechanism and a drive mechanism, the drive mechanism is disposed corresponding to the guide mechanism, the guide mechanism is connected to the movable adapter module, and the drive mechanism drives the movable adapter module to vertically move along the guide mechanism to further drive the support plate (111) to vertically move; and
the guide mechanism further comprises a linear guide module, the linear guide module is connected to the movable adapter module, the movable adapter module moves along the linear guide module to drive the support plate (111) to vertically move and further reduces resistance during movement of the support plate.

9. The protective apparatus for the laser device according to claim 5, wherein the protective housing further comprises a top plate (101), and the laser device (2) is connected to an outer wall of the protective housing (1) through the top plate (101); and
a bottom plate assembly is disposed at a bottom portion of the protective housing (1), the bottom plate assembly is configured to provide support force for the protective housing (1), and a sealing structure is disposed on the bottom plate assembly.

10. The protective apparatus for the laser device according to claim 9, wherein the bottom plate assembly further defines an exhaust port (118), the exhaust port (118) is communicated with an interior of the protective housing (1), and the exhaust port (118) is configured to exhaust gases and debris generated during the laser engraving;
at least one isolation structure and a collection module are disposed in the protective housing (1), and the collection module is configured to collect a state of the engraved object;
a limit structure is further disposed in the protective housing (1), and the limit structure is configured to stop movement of the support device when the support device moves to a limiting position;
a baffle plate is disposed on at least one of a first side surface of the protective housing (1) and a second side surface of the protective housing (1), and upon opening the baffle plate, the engraved object in the protective housing (1) is removed and the object to be engraved is placed therein;
a light strip (114) is disposed in the protective housing (1);
an adapter is disposed on a third side surface of the protective housing (1), and the adapter is configured to connect external functional devices to the protective housing (1); and
a monitor module is further disposed in the protective housing (1), and the monitor module is configured to detect the engraved object and an engraving state.
